# EUROPEAN PATENT APPLICATION

(11) **EP 3 108 992 A1**
(43) Date of publication of application: **28.12.2016**
(21) Application number: 15751429.0
(22) Date of filing: 18.02.2015
(51) Int. Cl.: B23K 26/04, B23K 26/00, B23K 26/082

(54) **LASER BEAM MACHINE**

(30) Priority: 21.02.2014 JP 2014031349
(71) Applicant: Panasonic Intellectual Property Management Co., Ltd., Osaka-shi, Osaka 570-6207 (JP)
(72) Inventor: ISHIGURO, Masashi, Osaka 540-6207 (JP); NISHIHARA, Manabu, Osaka 540-6207 (JP); SASAKI, Yoshinori, Osaka 540-6207 (JP)
(74) Representative: Vigand, Philippe
(86) International application number: PCT/JP2015/000751
(87) International publication number: WO 2015/125472

(57) **Abstract**

A laser beam machine has a control unit. The control unit transmits an output signal for starting an output of the laser beam at a first time point and stopping the output of the laser beam at a second time point which is later than the first time point, to the laser oscillator. The control unit receives a detection signal indicating first detection intensity which is greater than first preset intensity from the light detector, at a third time point which is later than the second time point. The control unit transmits a drive signal for controlling the emission unit to be driven, to the emission unit, at a fourth time point equal to or later than the third time point. The control unit transmits a warning signal at a fifth time point equal to or later than the third time point.

## Description

### TECHNICAL FIELD

The present disclosure relates to a laser beam machine which drills into a substrate by using laser beam, and particularly relates to a technique for preventing unsatisfactory machining caused by degraded characteristics of a laser oscillator used in a laser beam machine.

### BACKGROUND ART

In recent years, since components have been miniaturized, highly integrated, and complexly modularized, accuracy has progressively been required for drilling into a substrate. Accordingly, drilling using laser beam has increasingly been performed. Although a laser oscillator used for a laser beam machine is disposed as one unit of the laser beam machine, a laser medium is degraded due to long-term use, and thus, the laser oscillator comes to have degraded characteristics of outputting laser beam. Severely degraded characteristics of outputting the laser beam hinders precise laser drilling. Therefore, it is necessary to know a state where the laser beam is output from the laser oscillator.

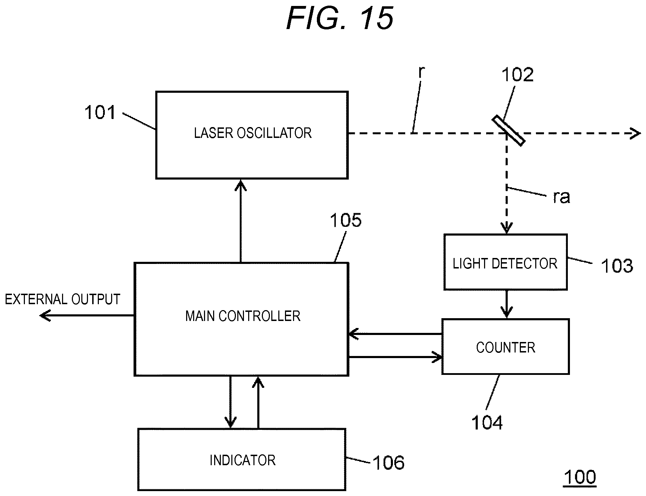

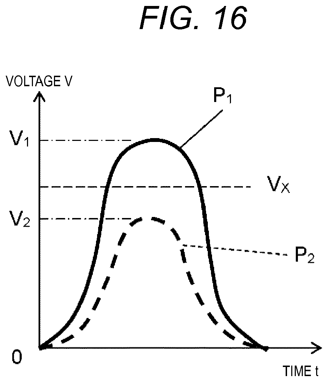

A conventional laser beam machine which is disclosed in PTL 1 will be described with reference to FIGS. 15 and 16. FIG. 15 is a block diagram illustrating a schematic configuration of conventional laser beam machine 100. FIG. 16 is a graph illustrating a detection value of light detector 103 of conventional laser beam machine 100.

Conventional laser beam machine 100 has laser oscillator 101, beam splitter 102, light detector 103, counter 104, main controller 105, and indicator 106. Main controller 105 outputs a pulse emitting command signal to laser oscillator 101. Laser oscillator 101 receiving the pulse emitting command signal emits laser r. Laser r is partially split into determination laser ra by beam splitter 102 installed in an optical path of laser r, and is guided to light detector 103. Light detector 103 measures energy intensity of determination laser ra. In addition, laser r from which determination laser ra is split is emitted to a substrate while an emission direction of laser r is changed by a galvano meter. One or a plurality of pulses of laser r is emitted to one split region in the substrate so as to perform the laser drilling. Thereafter, the galvano meter changes the emission direction of laser r to a split region requiring the subsequent laser drilling.

Light detector 103 measures the energy intensity by converting light energy of split determination laser ra into electrical energy.

FIG. 16 illustrates a voltage of laser pulse P1 as maximum voltage value V1, a voltage of laser pulse P2 as maximum voltage value V2, which are measured by light detector 103, and reference value Vx.

Counter 104 is connected to light detector 103, counts the number of determination lasers ra which indicates a voltage value equal to or greater than reference value Vx required for the laser drilling, and sends the count number to main controller 105. Main controller 105 controls laser oscillator 101 and counter 104, and performs an operation for comparing the count number sent from counter 104 and the emission number of lasers r. That is, if the voltage value detected by light detector 103 is equal to or greater than reference value Vx (maximum voltage value V1 of laser pulse P1), main controller 105 determines that the laser drilling is satisfactorily performed. If the voltage value detected by light detector 103 falls below reference value Vx (maximum voltage value V2 of laser pulse P2), main controller 105 determines that the laser drilling is unsatisfactorily performed.

Then, main controller 105 determines whether or not the laser drilling is satisfactorily performed, thereby outputting the determination result outward or displaying the determination result on indicator 106. In this manner, it is possible to know a split region having unsatisfactory machining or the progress of the laser drilling.

### Citation List

### Patent Literature

PTL 1: Japanese Patent Unexamined Publication No. 11-77355

### SUMMARY OF INVENTION

However, although a laser beam machine in the related art can determine unsatisfactory machining caused by a degraded output of a laser oscillator, the laser beam machine cannot determine or predict the unsatisfactory machining caused by degraded energy falling characteristics of the laser pulse.

According to the laser beam machine, in order to perform laser drilling multiple times in one split region, a galvano meter moves an emission direction of hole laser beam. However, in a case where a time required until an output of the laser beam decreases close to zero is lengthened due to degraded falling characteristics of the laser oscillator, the laser beam is emitted even while a galvano scanner moves the emission direction of the laser beam. Consequently, a hole shape formed by performing the laser drilling becomes an elliptical shape or a teardrop shape.

Therefore, a laser beam machine according to the present disclosure monitors energy falling characteristics of a laser pulse, and warns or prevents unsatisfactory laser machining.

According to an exemplary embodiment of the present disclosure, in order to solve the above-described problem, there is provided a laser beam machine having a laser oscillator, a spectroscope, a light detector, an emission unit, and a control unit. The laser oscillator outputs laser beam. The laser beam is entered on the spectroscope, and the spectroscope emits the laser beam after splitting the laser beam into machining laser beam and measurement laser beam. The measurement laser beam is entered on the light detector, and the light detector transmits a detection signal indicating intensity of the measurement laser beam. The machining laser beam is entered on the emission unit, and the emission unit emits the machining laser beam to a workpiece. The control unit is connected to the laser oscillator, the light detector, and the emission unit. Furthermore, the control unit transmits an output signal for starting an output of the laser beam at a first time point and stopping the output of the laser beam at a second time point which is later than the first time point, to the laser oscillator. Furthermore, the control unit receives a detection signal indicating first detection intensity which is greater than first preset intensity from the light detector, at a third time point which is later than the second time point. Furthermore, the control unit transmits a drive signal for controlling the emission unit to be driven, to the emission unit, at a fourth time point equal to or later than the third time point. Furthermore, the control unit transmits a warning signal at a fifth time point equal to or later than the third time point.

In addition, according to another exemplary embodiment of the present disclosure, there is provided a laser beam machine having a laser oscillator, a spectroscope, a light detector, an emission unit, and a control unit. The laser oscillator outputs laser beam. The laser beam is entered on the spectroscope, and the spectroscope emits the laser beam after splitting the laser beam into machining laser beam and measurement laser beam. The measurement laser beam is entered on the light detector, and the light detector transmits a detection signal indicating intensity of the measurement laser beam. The machining laser beam is entered on the emission unit, and the emission unit emits the machining laser beam to a workpiece. The control unit is connected to the laser oscillator, the light detector, and the emission unit. Furthermore, the control unit transmits an output signal for starting an output of the laser beam at a first time point and stopping the output of the laser beam at a second time point which is later than the first time point, to the laser oscillator. Furthermore, the control unit periodically receives the detection signal from the light detector, at a time point equal to or later than the second time point. Furthermore, the control unit receives the detection signal indicating third detection intensity which is smaller than third preset intensity, from the light detector at a seventh time point which is later than the second time point. Furthermore, the control unit transmits a drive signal for operating the emission unit, to the emission unit at an eighth time point equal to or later than the seventh time point.

According to the above-described configuration, the laser beam machine according to the present disclosure monitors degraded energy falling characteristics of a laser pulse, and warns or prevents unsatisfactory laser machining.

### BRIEF DESCRIPTION OF DRAWINGS

FIG. 1 is a perspective view illustrating a schematic configuration of a laser beam machine according to Exemplary Embodiment 1.
FIG. 2 is a block diagram for describing a detailed configuration of a control unit according to Exemplary Embodiment 1.
FIG. 3 is a timing chart illustrating each state of (a) a laser pulse output command signal, (b) a detection signal, and (c) a galvano operation command signal of the laser beam machine according to Exemplary Embodiment 1.
FIG. 4 is a timing chart illustrating each state of (a) the laser pulse output command signal, (b) the detection signal, and (c) the galvano operation command signal of the laser beam machine according to Exemplary Embodiment 1.
FIG. 5 is a flowchart illustrating an operation of the laser beam machine according to Exemplary Embodiment 1.
FIG. 6 is a timing chart illustrating each state of (a) a laser pulse output command signal, (b) a detection signal, and (c) a galvano operation command signal of a laser beam machine according to Modification Example 1 of Exemplary Embodiment 1.
FIG. 7 is a timing chart illustrating each state of (a) a laser pulse output command signal, (b) a detection signal, and (c) a galvano operation command signal of a laser beam machine according to Modification Example 2 of Exemplary Embodiment 1.
FIG. 8 is a flowchart illustrating an operation of a laser beam machine according to Modification Example 2 of Exemplary Embodiment 1.
FIG. 9 is a timing chart illustrating each state of (a) a laser pulse output command signal, (b) a detection signal, and (c) a galvano operation command signal of a laser beam machine according to Modification Example 3 of Exemplary Embodiment 1.
FIG. 10 is a timing chart illustrating each state of (a) a laser pulse output command signal, (b) a detection signal, and (c) a galvano operation command signal of a laser beam machine according to Modification Example 4 of Exemplary Embodiment 1.
FIG. 11 is a flowchart illustrating an operation of a laser beam machine according to Modification Example 4 of Exemplary Embodiment 1.
FIG. 12 is a timing chart illustrating each state of (a) a laser pulse output command signal, (b) a detection signal, and (c) a galvano operation command signal of a laser beam machine according to Exemplary Embodiment 2.
FIG. 13 is a flowchart illustrating an operation of the laser beam machine according to Exemplary Embodiment 2.
FIG. 14 is a perspective view illustrating a schematic configuration of another laser beam machine according to the present disclosure.
FIG. 15 is a block diagram illustrating a schematic configuration of a conventional laser beam machine.
FIG. 16 is a graph illustrating a detection value of a light detector of the conventional laser beam machine.

### DESCRIPTION OF EMBODIMENTS

Hereinafter, exemplary embodiments of the present disclosure will be described with reference to the drawings. In the following drawings, the same reference numerals will be given to the same configuration elements, and thus, description thereof will be omitted in some cases. In addition, an X-axis, a Y-axis, and a Z-axis illustrated in the drawings are orthogonal to each other. Here, a direction of the Z-axis represents a vertical direction, and a coordinate axis in each drawing corresponds to each viewing direction.

### (Exemplary Embodiment 1)

### <Configuration of Laser Beam Machine 1>

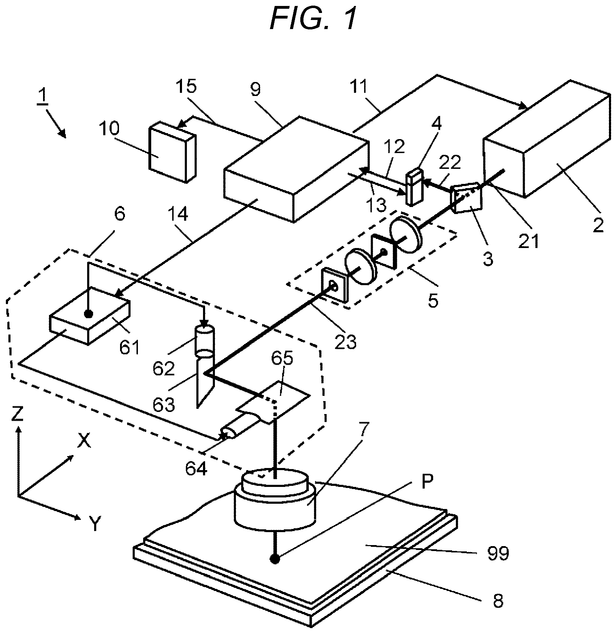

FIG. 1 is a perspective view illustrating a schematic configuration of laser beam machine 1 according to the present exemplary embodiment. As illustrated in FIG. 1, laser beam machine 1 has laser oscillator 2, spectroscope 3, light detector 4, optical adjustment unit 5, galvano scanner 6, condenser lens 7, machining table 8, control unit 9, and warning display unit 10. Galvano scanner 6 and condenser lens 7 are collectively referred to as an emission unit.

Laser oscillator 2 receives laser pulse output command signal 11 output from control unit 9, and emits laser beam 21. As a type of laser oscillator 2, a suitable method such as a YAG laser and a carbon dioxide gas laser may be selected in view of energy for machining or a laser wavelength. In the present exemplary embodiment, a case will be described where a sealing-type radio frequency (RF) excitation carbon dioxide gas laser is used as laser oscillator 2. The reason is that it is possible to obtain laser beam having a high peak output in a short pulse which is required in a case where fast drilling is performed on a substrate serving as a workpiece.

Laser beam 21 emitted from laser oscillator 2 is guided to spectroscope 3 immediately after laser beam 21 is emitted or after laser beam 21 is reflected on a mirror depending on an installation place of laser oscillator 2.

Spectroscope 3 is a laser splitter which splits the entered laser beam into reflection light and transmission light. According to the present exemplary embodiment, spectroscope 3 reflects measurement laser beam 22 corresponding to energy of approximately 0.5% to 1% which is a minority of laser beam 21, and transmits machining laser beam 23 corresponding to energy of approximately 99% to 99.5% which is a majority of laser beam 21.

Measurement laser beam 22 is entered on light detector 4, and energy of measurement laser beam 22 is measured. Machining laser beam 23 is guided to optical adjustment unit 5 for laser machining. Spectroscope 3 may transmit a minority of laser beam 21 as measurement laser beam 22, and may reflect a majority of laser beam 21 as machining laser beam 23.

Light detector 4 detects measurement laser beam 22, and outputs (transmits) detection signal 12 indicating energy (detection intensity) of measurement laser beam 22 to control unit 9. Specifically, light detector 4 has a light amount measuring element such as a photodiode and a phototransistor, an amplifier circuit, and an analog/digital (A/D) converter. Light detector 4 converts measurement laser beam 22 into a voltage value indicating the detection intensity of measurement laser beam 22, and caused the A/D converter to convert the voltage value into digital data. Sampling command signal 13 as a latch clock is input to (received by) the A/D converter from control unit 9. The A/D converter detects the voltage value, and outputs (transmits) the digital data as detection signal 12 to control unit 9.

On the other hand, machining laser beam 23 is guided to optical adjustment unit 5. Optical adjustment unit 5 has an optical element such as a collimator lens, an aperture stop, and an iris, and shapes machining laser beam 23 into a substantially parallel pencil of light rays having an output (energy) or a profile (energy distribution) suitable for laser machining. The iris has a shaping hole for shaping a beam shape of machining laser beam 23.

Shaped machining laser beam 23 is guided to galvano scanner 6 functioning as an emission unit. Galvano scanner 6 has galvano controller 61, motors 62 and 64, and galvano mirrors 63 and 65. Galvano operation command signal 14 is input to (received by) galvano scanner 6 from control unit 9, and galvano scanner 6 is operated so that machining laser beam 23 is emitted to machining position P of workpiece 99. Specifically, galvano mirror 63 installed in motor 62 scans machining position P in an X-axis direction with machining laser beam 23, and galvano mirror 65 installed in motor 64 scans machining position P in a Y-axis direction with machining laser beam 23. In accordance with data of machining position P which is provided by a machining program, galvano controller 61 controls galvano mirrors 63 and 65 via motors 62 and 64.

Machining laser beam 23 positioned by galvano scanner 6 is focused on machining position P of workpiece 99 by condenser lens 7 (fθ lens). Workpiece 99 is a sheet-like member such as a substrate, a green sheet, a film, a thin sheet metal plate. Workpiece 99 is placed on machining table 8. Machining table 8 can move workpiece 99 in the X-axis direction and the Y-axis direction, and can move workpiece 99 to the outside of a machining area from the machining area where scanning can be performed by galvano scanner 6.

Then, based on an operation of laser oscillator 2, energy (detection intensity) of measurement laser beam 22 received from light detector 4, and an operation of galvano scanner 6, control unit 9 transmits warning signal 15 to warning display unit 10. A time for transmitting warning signal 15 to warning display unit 10 is set to be a fifth time point.

### <Detailed Configuration of Control Unit 9>

Control unit 9 is connected to at least laser oscillator 2, light detector 4, and galvano scanner 6 so as to control laser oscillator 2, light detector 4, and galvano scanner 6.

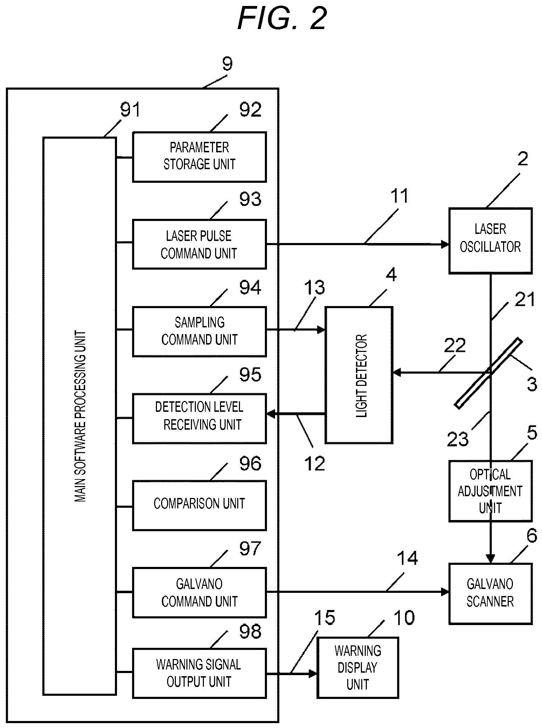

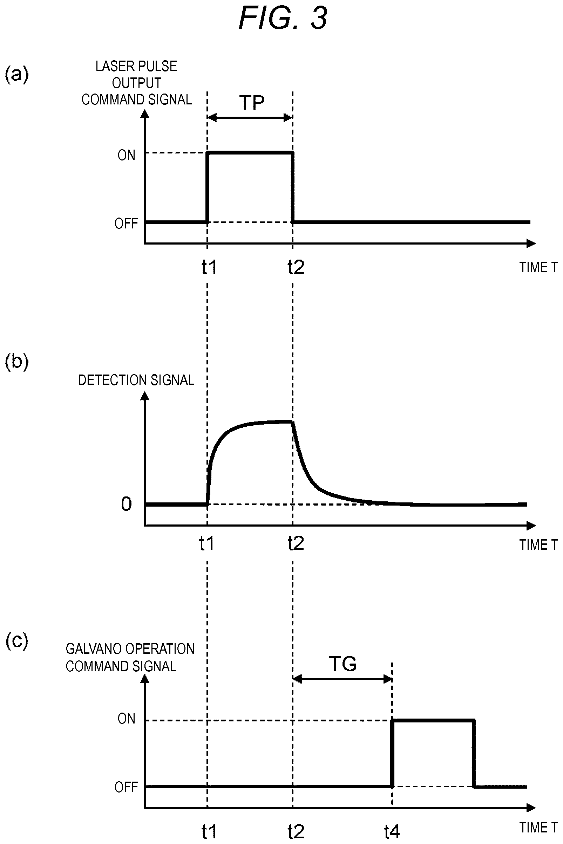

FIG. 2 is a block diagram for describing a detailed configuration of control unit 9 according to the present exemplary embodiment. FIG. 3 is a timing chart illustrating each state of (a) a laser pulse output command signal, (b) a detection signal, and (c) a galvano operation command signal of the laser beam machine according to the present exemplary embodiment. In (a) to (c) of FIG. 3, the horizontal axis represents a timing chart of time t. Although the scale is not constant, an anteroposterior relationship between respective times is correct.

In FIG. 2, control unit 9 has main software processing unit 91, parameter storage unit 92, laser output command unit 93, sampling command unit 94, detection level receiving unit 95, comparison unit 96, galvano command unit 97, and warning signal output unit 98.

These configuration elements are obtained by visualizing a function belonging to control unit 9. Accordingly, these configuration elements may be configured to include individually independent hardware, or may be configured to include a combination of interface and software. In addition, these configuration elements are provided so as to describe characteristic configurations or operations of the present disclosure, within the function of control unit 9, and further have other control functions of laser beam machine 1.

Parameter storage unit 92 stores various parameters predetermined prior to the operation of laser beam machine 1 in a format comparable with other signal levels.

In accordance with a machining program, laser output command unit 93 outputs laser pulse output command signal 11 to laser oscillator 2. FIG. 3(a) illustrates a timing chart of laser pulse output command signal 11. Laser pulse output command signal 11 is turned on from off at time t1 (first time point), and is turned off from on at time t2 (second time point). Laser pulse output command signal 11 has a pulse shape. RF excitation pulse width TP (time period from time t1 to time t2) is several ten µ seconds to several hundred µ seconds. In a case of actual machining, optimum RF excitation pulse width TP is determined based on a relationship between laser power and a material or a thickness of a workpiece. According to the present exemplary embodiment, RF excitation pulse width TP is set to approximately 100 µ seconds.

Sampling command unit 94 outputs sampling command signal 13 to light detector 4, and commands light detector 4 so as to measure energy of measurement laser beam 22 and to output detection signal 12 to detection level receiving unit 95. Output detection signal 12 is received by detection level receiving unit 95.

FIG. 3(b) illustrates detection signal 12 received from light detector 4 by detection level receiving unit 95. However, for the purpose of description, on the assumption of continuous detection signal sampling, a graph of detection signal 12 is illustrated. Detection signal 12 is an electrical signal proportional to a light amount of measurement laser beam 22. FIG. 3(b) illustrates the same transition of energy intensity of laser beam 21. As illustrated in FIG. 3(b), detection signal 12 starts to increase from time t1, and decreases from time t2.

In accordance with a machining program, galvano command unit 97 outputs galvano operation command signal 14 to galvano scanner 6. FIG. 3(c) illustrates a timing chart of galvano operation command signal 14. In order to start to operate galvano scanner 6 after laser is completely emitted to workpiece 99, galvano operation command signal 14 is output at time t4 (fourth time point) that predetermined galvano operation waiting time TG has elapsed from time t2 which is the end of laser pulse output command signal 11.

In a case where a warning is required, warning signal output unit 98 outputs warning signal 15. Warning display unit 10 receiving warning signal 15 displays the warning to a worker. The warning may be displayed using characters or figures on a screen, or the worker may be informed of the warning by sound. In addition, without providing an independent warning display unit, the warning may be displayed on a screen for operation.

Main software processing unit 91 controls the above-described configuration elements in accordance with the machining program, and also concurrently performs time series control while internally having a timer function.

FIG. 3 illustrates one cycle in which laser machining is performed in one machining region of workpiece 99 by using one pulse, and in which galvano scanner 6 moves machining laser beam 23 to the subsequent machining region. However, in one cycle, the laser machining may be performed in one machining region of workpiece 99 by using a plurality of pulses, and machining table 8 may move machining laser beam 23 to the subsequent machining region. In this case, FIG. 3 illustrates the last pulse within one cycle.

### <Operation of Laser Beam Machine 1>

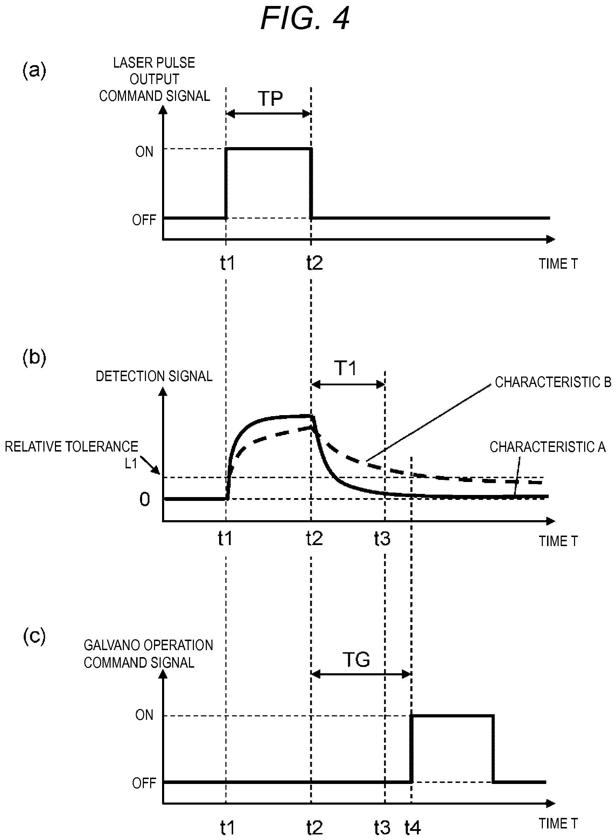

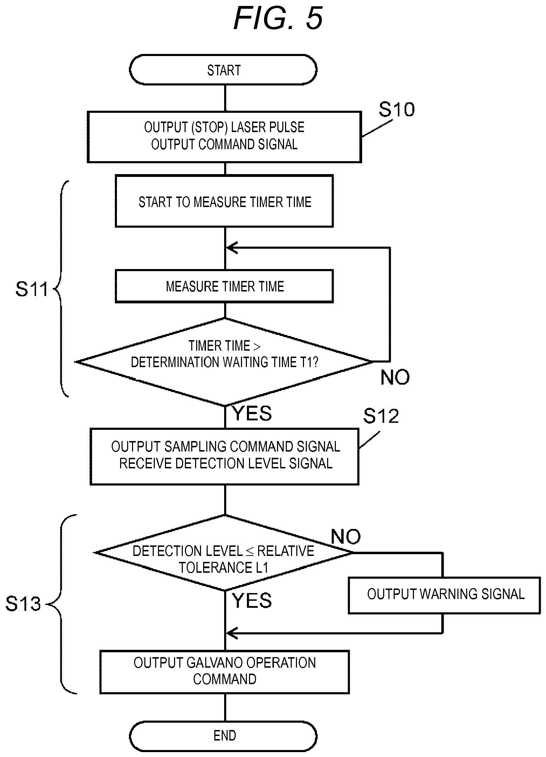

An operation of the laser beam machine according to the present disclosure which is configured as described above will be described with reference to FIGS. 4 and 5.

If necessary, laser oscillator 2 is sufficiently warmed up. Workpiece 99 is placed on and fixed to machining table 8, and is moved to a predetermined machining area. In accordance with the machining program, galvano scanner 6 is positioned so as to emit machining laser beam 23 to predetermined machining position P. In this state, machining laser beam 23 is emitted as a pulse, thereby machining workpiece 99. For example, machining workpiece 99 is drilling. Galvano scanner 6 is positioned so as to emit machining laser beam 23 to subsequent machining position P. Machining laser beam 23 is emitted as a pulse, thereby machining workpiece 99. The above-described cycle is repeatedly performed, thereby entirely machining workpiece 99. Hereinafter, one cycle in the laser machining in which machining is performed in one machining region of workpiece 99 by using one laser pulse will be described with reference to the drawings. FIG. 4 is a timing chart illustrating each state of (a) the laser pulse output command signal, (b) the detection signal, and (c) the galvano operation command signal of the laser beam machine according to the present exemplary embodiment. The same reference numerals will be given to configurations which are the same as those in FIG. 3, and description thereof will be omitted.

If galvano scanner 6 is positioned so as to emit machining laser beam 23 to a predetermined position, control unit 9 outputs laser pulse output command signal 11 to laser oscillator 2 at time t1, and stops outputting laser pulse output command signal 11 at time t2. As illustrated in FIG. 4(a), laser pulse output command signal 11 is a pulse-shaped signal which turns on laser oscillator 2 during only a time of predetermined RF excitation pulse width TP.

Laser oscillator 2 excites a laser medium after receiving that laser pulse output command signal 11 is turned on. However, it takes a time for rising until energy intensity of laser beam 21 reaches peak intensity as illustrated by characteristic A (solid line portion) in FIG. 4(b). Similarly, it takes time for falling until the energy of laser beam 21 falls down to substantially zero, even if laser pulse output command signal 11 is turned off from on. As described above, an energy change in measurement laser beam 22 measured by light detector 4 is the same as an energy change in laser beam 21 output from laser oscillator 2. Rising and falling times of laser beam 21 is determined depending on the characteristics of laser oscillator 2. In a case of the RF excitation carbon dioxide gas laser according to the present exemplary embodiment, the characteristics show an order of several ten µ seconds. The characteristics are presented as a part of specifications in catalogs. As a manufacturer's guarantee, an enough margin is allowed. For example, the maximum time is allowed so as to satisfy "< 60 µ seconds".

After the laser machining is performed at one machining position of workpiece 99 by using one laser pulse, galvano scanner 6 is driven so as to move machining laser beam 23 to the subsequent machining position. In view of the above-described falling time of the laser pulse, galvano operation waiting time TG is set in order to drive galvano scanner 6. The reason is that if galvano scanner 6 is driven while machining laser beam 23 is output (emitted), machining laser beam 23 is emitted to a portion where the machining is unnecessary, thereby resulting in unsatisfactory machining. FIG. 4(c) is a timing chart illustrating an output of galvano operation command signal 14. Galvano operation command signal 14 is turned on at time t4 that galvano operation waiting time TG has elapsed from time t2 that laser pulse output command signal 11 is turned off from on.

Galvano operation waiting time TG is set to allow an enough time margin which is a maximum value of the falling time of laser beam 21, or which is longer than the maximum value. For example, if the falling time according to the specifications of laser oscillator 2 is set to "< 60 µ seconds", 60 µ seconds, 80 µ seconds, or 100 µ seconds allowing the greater margin may be employed as an example. However, if galvano operation waiting time TG increases, the machining time is lengthened, thereby increasing the machining cost. Therefore, it is desirable to decrease galvano operation waiting time TG within a range not causing unsatisfactory machining.

Incidentally, as illustrated by characteristic B (broken line portion) in FIG. 4(b), it is understood that energy rising and falling characteristics of laser beam 21 are degraded while laser oscillator 2 is used. That is, the energy rising time and falling time of laser beam 21 are lengthened. Accordingly, even at time t4 that galvano operation waiting time TG has elapsed, laser beam 21 does not sufficiently falls, and is brought into a state where the output still remains.

Therefore, according to the present disclosure, the following control is performed in order to prevent unsatisfactory machining caused by degraded energy characteristics of laser beam 21.

FIG. 5 is a flowchart illustrating an operation of laser beam machine 1 according to the present exemplary embodiment. The flowchart illustrated in FIG. 5 mainly shows an operation of control unit 9.

First, galvano scanner 6 is positioned so as to emit machining laser beam 23 to predetermined machining position P. Next, laser pulse output command signal 11 which is turned on at time t1 and which is turned off at time t2 is output from control unit 9. Laser oscillator 2 receiving laser pulse output command signal 11 starts to excite a laser medium so as to output laser beam 21 at time t1, and stops supplying excitation power at time t2 (S10).

Next, control unit 9 starts to measure the time elapsed from time t2, and determines whether or not preset determination time T1 stored in parameter storage unit 92 has elapsed (S11). The time that determination time T1 has elapsed from time t2 is set to time t3 (third time point).

Control unit 9 outputs sampling command signal 13 to light detector 4 at time t3, and light detector 4 outputs detection signal 12 (first detection intensity) indicating energy of measurement laser beam 22 measured at time t3 that sampling command signal 13 is received, to control unit 9 (S12).

Next, control unit 9 compares detection signal 12 and relative tolerance L1 (first preset intensity) at time t3. For example, as illustrated by characteristic A (solid line portion) in FIG. 4(b), in a case where the energy of measurement laser beam 22 indicated by detection signal 12 at time t3 is smaller than relative tolerance L1, control unit 9 determines that oscillation of laser beam 21 from laser oscillator 2 is normal. As illustrated by characteristic B (broken line portion) in FIG. 4(b), in a case where the energy of measurement laser beam 22 indicated by detection signal 12 is greater than relative tolerance L1, control unit 9 determines that oscillation of laser beam 21 from laser oscillator 2 is abnormal. In a case where it is determined as normal, control unit 9 does not transmit warning signal 15, and outputs galvano operation command signal 14 at time t4 that galvano operation waiting time TG has elapsed. In a case where it is determined as abnormal, control unit 9 outputs warning signal 15 to warning display unit 10, and then, outputs galvano operation command signal 14 at time t4 that galvano operation waiting time TG has elapsed (S13).

In this manner, it is possible to inform a worker of degraded falling characteristics caused by laser oscillator 2.

### (Modification Example 1 of Exemplary Embodiment 1)

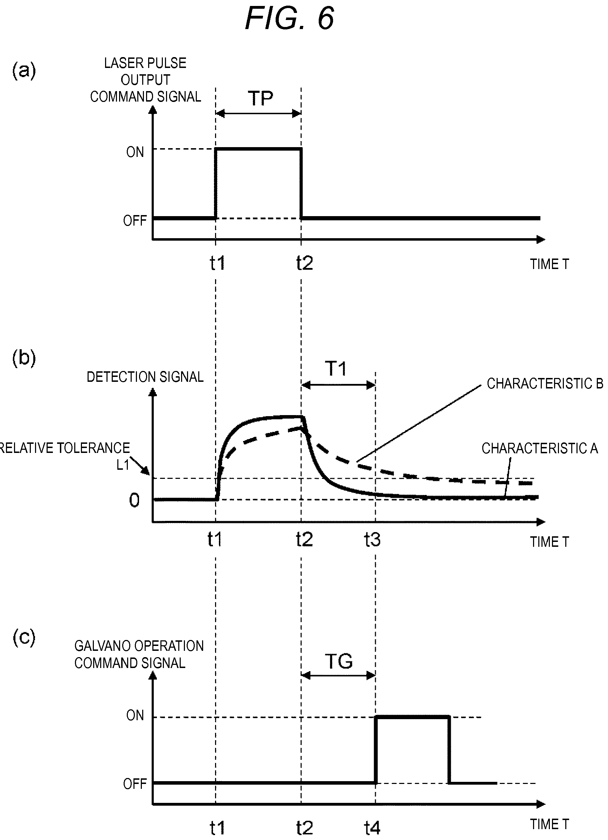

Next, Modification Example 1 of Exemplary Embodiment 1 will be described with reference to FIG. 6. FIG. 6 is a timing chart illustrating each state of (a) a laser pulse output command signal, (b) a detection signal, and (c) a galvano operation command signal of the laser beam machine according to the present modification example. The same reference numerals will be given to configurations which are the same as those in FIG. 4, and description thereof will be omitted.

As illustrated in FIG. 6, a different point between the present modification example and Exemplary Embodiment 1 is that determination time T1 and galvano operation waiting time TG are concurrent with each other. That is, time t3 and time t4 are concurrent with each other.

In a case where the energy of measurement laser beam 22 indicated by detection signal 12 is smaller than relative tolerance L1 (characteristic A illustrated by a solid line) at time t3, control unit 9 does not transmit warning signal 15, and laser beam machine 1 continues to perform laser machining on workpiece 99. Then, in a case where the energy of measurement laser beam 22 indicated by detection signal 12 is greater than relative tolerance L1 (characteristic B illustrated by a broken line) at time t3, although control unit 9 transmits warning signal 15, laser beam machine 1 continues to perform laser machining on workpiece 99. In this case, relative tolerance L1 serving as a reference for transmitting warning signal 15 may be set to be lower (strict) to such an extent that the laser machining has no problem with this cycle. In this manner, galvano operation waiting time TG can be minimized, and a tact time can be shortened, thereby improving productivity. Furthermore, warning signal 15 allows a worker to recognize that the falling characteristics of laser oscillator 2 are degraded.

### (Modification Example 2 of Exemplary Embodiment 1)

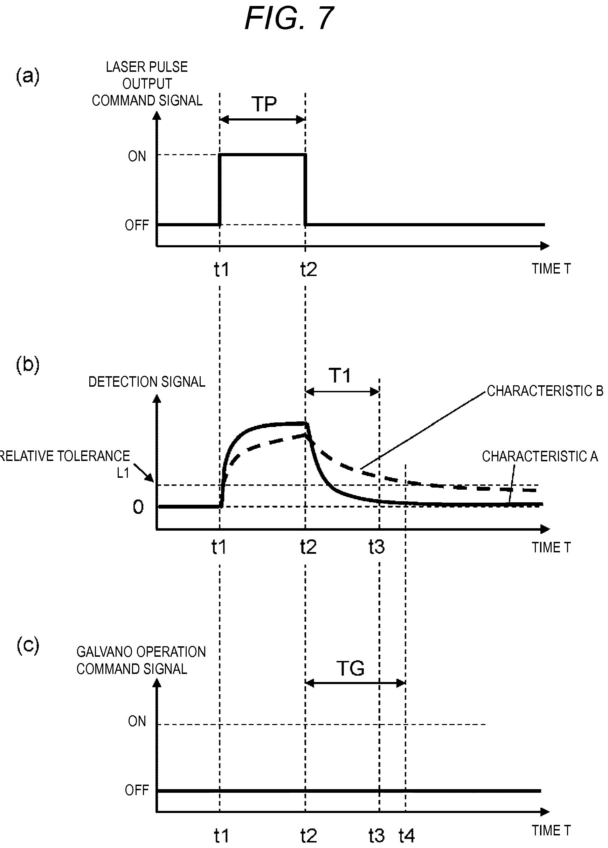

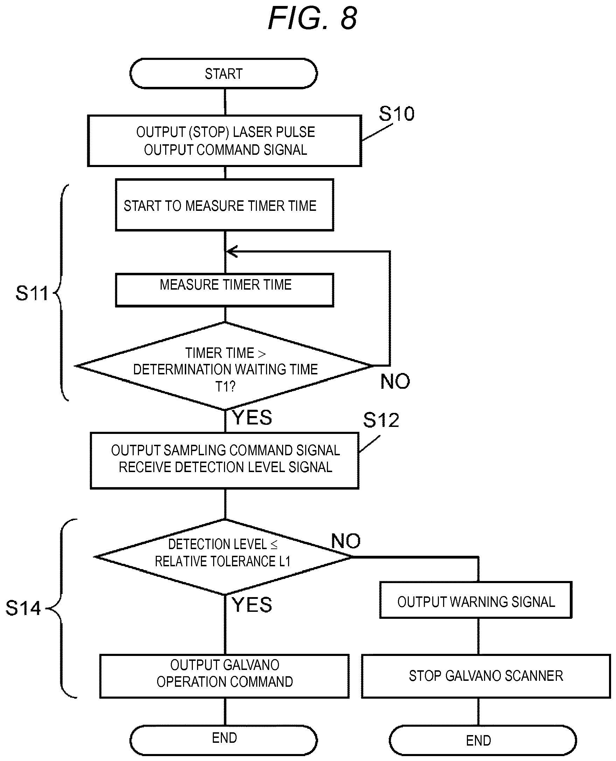

Next, Modification Example 2 of Exemplary Embodiment 1 will be described with reference to FIGS. 7 and 8. FIG. 7 is a timing chart illustrating each state of (a) a laser pulse output command signal, (b) a detection signal, and (c) a galvano operation command signal of the laser beam machine according to the present modification example. The same reference numerals will be given to configurations which are the same as those in FIG. 4, and description thereof will be omitted. In addition, FIG. 8 is a flowchart illustrating an operation of the laser beam machine 1 according to the present modification example. The same reference numerals will be given to configurations which are the same as those in FIG. 5, and description thereof will be omitted.

As illustrated in FIG. 7(c) and S14 in FIG. 8, a different point between the present modification example and Exemplary Embodiment 1 is that an operation of galvano scanner 6 is stopped in a case where warning signal 15 is transmitted.

In a case where the energy of measurement laser beam 22 indicated by detection signal 12 is smaller than relative tolerance L1 (characteristic A illustrated by a solid line) at time t3, control unit 9 does not transmit warning signal 15, and laser beam machine 1 continues to perform laser machining on workpiece 99. Then, in a case where the energy of measurement laser beam 22 indicated by detection signal 12 is greater than relative tolerance L1 (characteristic B illustrated by a broken line) at time t3, control unit 9 transmits warning signal 15. Further, control unit 9 does not output galvano operation command signal 14 even at time t4 that galvano operation waiting time TG has elapsed, and continues to stop galvano scanner 6 (S14). Consequently, laser oscillator 2 is also stopped. In this case, relative tolerance L1 serving as a reference for transmitting warning signal 15 can be set to be higher to such an extent that the laser machining has a problem with this cycle. In this manner, in a state where the falling of machining laser beam 23 is insufficient, galvano scanner 6 is not driven. Accordingly, it is possible to prevent unsatisfactory machining. Furthermore, warning signal 15 allows a worker to recognize that laser oscillator 2 is stopped. In addition, since relative tolerance L1 can be set to be higher, warning signal 15 having no problem in the laser machining is not transmitted.

### (Modification Example 3 of Exemplary Embodiment 1)

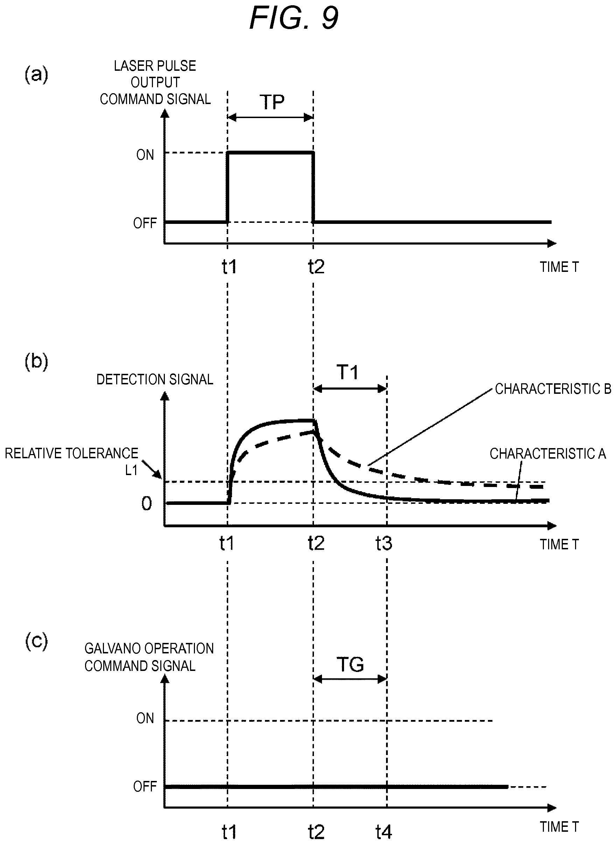

Next, Modification Example 3 of Exemplary Embodiment 1 will be described with reference to FIG. 9. FIG. 9 is a timing chart illustrating each state of (a) a laser pulse output command signal, (b) a detection signal, and (c) a galvano operation command signal of the laser beam machine according to the present modification example. The same reference numerals will be given to configurations which are the same as those in FIG. 6, and description thereof will be omitted. In addition, FIG. 8 used in Modification Example 2 is also a flowchart illustrating an operation of laser beam machine 1 according to the present modification example. The same reference numerals will be given to configurations which are the same as those in FIG. 5, and description thereof will be omitted.

As illustrated in FIG. 9(c) and S14 in FIG. 8, a different point between the present modification example and Modification Example 1 of Exemplary Embodiment 1 is that an operation of galvano scanner 6 is stopped in a case where warning signal 15 is transmitted. As illustrated in FIG. 9, a common point between the present modification example and Modification Example 1 of Exemplary Embodiment 1 is that determination time T1 and galvano operation waiting time TG are concurrent with each other. That is, time t3 and time t4 are concurrent with each other.

In a case where the energy of measurement laser beam 22 indicated by detection signal 12 is smaller than relative tolerance L1 (characteristic A illustrated by a solid line) at time t3, control unit 9 does not transmit warning signal 15, and laser beam machine 1 continues to perform laser machining on workpiece 99. Then, in a case where the energy of measurement laser beam 22 indicated by detection signal 12 is greater than relative tolerance L1 (characteristic B illustrated by a broken line) at time t3, control unit 9 transmits warning signal 15. Control unit 9 does not output galvano operation command signal 14, and stops galvano scanner 6. Consequently, laser oscillator 2 is also stopped. In this case, relative tolerance L1 serving as a reference for transmitting warning signal 15 may be set to be higher to such an extent that the laser machining has a problem with this cycle. Time t3 and time t4 are substantially concurrent with each other. However, time t4 is later than time t3 since it takes time when control unit 9 receives detection signal 12 and performs an operation for comparing with relative tolerance L1. This time is in a nanosecond level, and thus, is defined as "concurrent" in this disclosure.

In this manner, in a state where the falling of machining laser beam 23 is insufficient, galvano scanner 6 is not driven. Accordingly, it is possible to prevent unsatisfactory machining. Furthermore, warning signal 15 allows a worker to recognize that laser oscillator 2 is stopped. Then, in a case of normal laser machining, galvano operation waiting time TG can be minimized, and a tact time can shortened, thereby improving productivity.

### <Parameter Setting and Receiving Timing>

As described above, according to the present disclosure, it is possible to perform controlling described in Exemplary Embodiment 1 and Modification Examples 1 to 3. Then, in each case, it is important to set determination time T1, galvano operation waiting time TG, and relative tolerance L1. Here, some determination methods of galvano operation waiting time TG and relative tolerance L1 will be described as an example.

A first determination method is to use a maximum value of the falling time presented as specifications of the laser oscillator. Compared to the characteristics generally presented in the specifications, actual characteristics are slightly excellent in many cases. In particular, a guaranteed maximum value has an enough margin set in view of variations between models. Accordingly, in a case where the characteristics are degraded to such an extent that the enough margin is no longer expected, the case is a target for warning that there is a possibility of unsatisfactory machining.

For example, according to the specifications in which the falling time to reach 5% of peak energy of laser beam 21 is shorter than 50 µ seconds, relative tolerance L1 is set to a value of detection signal 12 which corresponds to 5% of the peak energy, and determination time T1 is set to 50 µ seconds of the guaranteed value. According to these settings, in a case where the falling characteristics of laser beam 21 are degraded to exceed a guaranteed level, warning signal 15 enables a worker to recognize the case. In this case, if galvano operation waiting time TG is set to be longer than determination time T1 by allowing margin as much as possible, the energy of laser beam 21 further decreases until galvano scanner 6 is operated. In this manner, even if warning signal 15 is generated, it is not necessary to stop the laser machining of workpiece 99. Then, it is possible to prevent laser beam machine 1 from performing unsatisfactory machining by carrying out maintenance work for laser beam machine 1 after the laser machining is completed.

A second determination method is to receive detection signal 12 concurrently with galvano operation waiting time TG. If galvano scanner 6 is driven in a state where the energy of laser beam 21 does not sufficiently decrease, unsatisfactory machining occurs. However, the energy of machining laser beam 23 which does not cause the unsatisfactory machining does not need to be completely zero, and has a limited value. The limited value is determined depending on a material of workpiece 99. A value of detection signal 12 which has a slightly allowed margin from the limited value and which indicates the energy of measurement laser beam 22 is set to relative tolerance L1. Determination time T1 and galvano operation waiting time TG are set to be the same as each other.

In this manner, even when the energy falling characteristics of laser beam 21 are degraded, if warning signal 15 is not output, at a time point that galvano scanner 6 starts to be operated, the energy of machining laser beam 23 falls within the limited value which does not cause unsatisfactory machining. In a case where warning signal 15 is output, if the laser machining is continuously performed, there is a possibility that unsatisfactory machining may occur. Accordingly, a worker may immediately stop laser beam machine 1 and may carry out maintenance work.

A third is to determine whether or not galvano scanner 6 is in an abnormal state before galvano scanner 6 starts to be operated. Relative tolerance L1 is set to a value of detection signal 12 which does not cause unsatisfactory machining even if galvano scanner 6 is operated and which corresponds to the limited value of the energy of machining laser beam 23. Galvano operation waiting time TG is set to be longer than determination time T1.

According to these settings, before galvano operation command signal 14 is output, it is possible to determine degraded falling characteristics of laser beam 21 which may cause unsatisfactory machining. In a case where it is determined that the falling characteristics are normal by comparing the value of detection signal 12 and relative tolerance L1, even if galvano scanner 6 is operated, the unsatisfactory machining does not occur. In addition, in a case where it is determined that the falling characteristics are abnormal, if the laser machining is stopped without outputting galvano operation command signal 14, it is possible to prevent the unsatisfactory machining of workpiece 99. The reason that the laser machining is stopped is displayed on warning display unit 10 after warning signal 15 is output. Accordingly, a worker can also recognize the reason. In addition, since galvano operation waiting time TG is longer than determination time T1, the energy of laser beam 21 further decreases. Therefore, even in a case where it is determined that the falling characteristics are abnormal, if the worker stops the laser machining as early as possible, the worker can prevent the unsatisfactory machining of workpiece 99.

### (Modification Example 4 of Exemplary Embodiment 1)

The above-described first to third comparison methods and settings can be combined with each other. For example, according to the first comparison method, although the warning is performed, the machining can be continued. According to the second comparison method, in a case where it is determined as abnormal, not only the warning can be performed, but also laser beam machine 1 can be stopped.

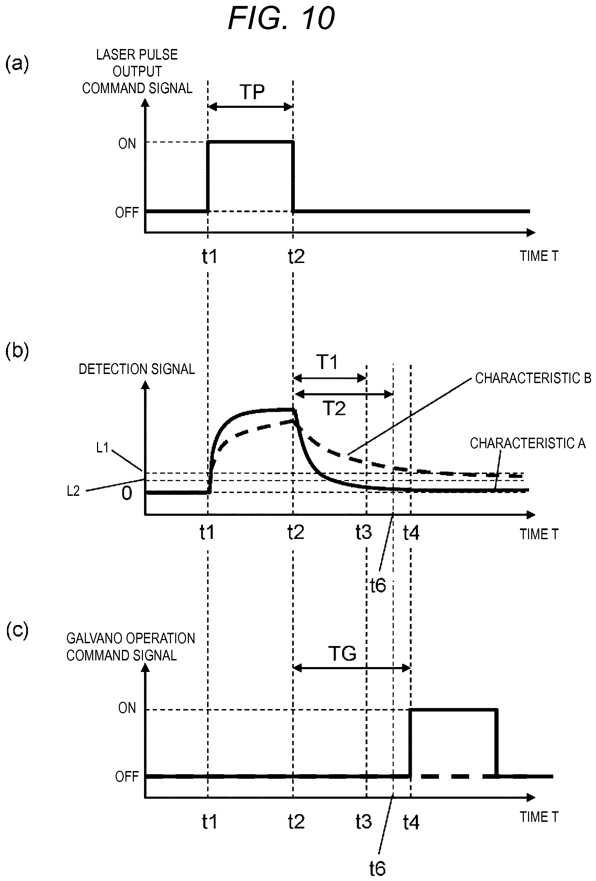

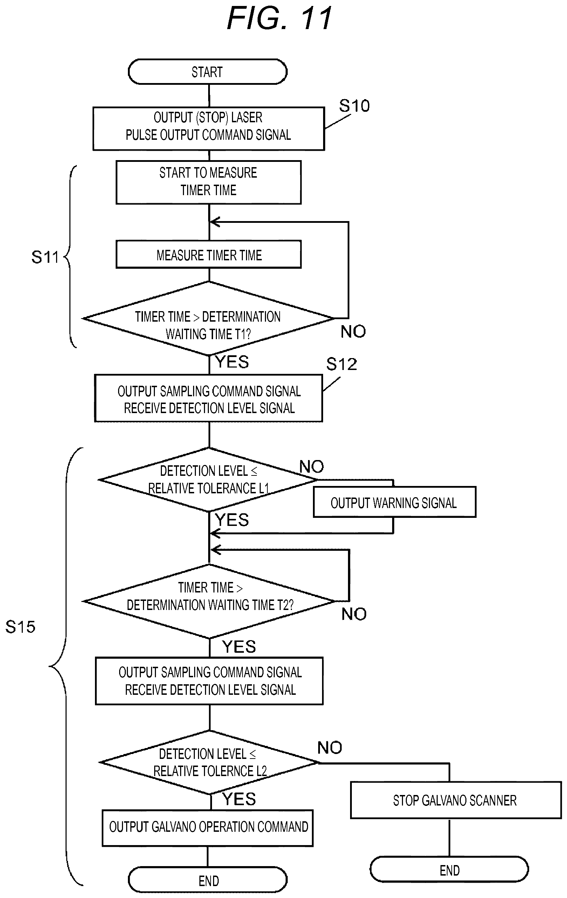

Modification Example 4 of Exemplary Embodiment 1 will be described with reference to FIGS. 10 and 11. FIG. 10 is a timing chart illustrating each state of (a) a laser pulse output command signal, (b) a detection signal, and (c) a galvano operation command signal of the laser beam machine according to the present modification example. The same reference numerals will be given to configurations which are the same as those in FIG. 4, and description thereof will be omitted. In addition, FIG. 11 is a flowchart illustrating an operation of laser beam machine 1 according to the present modification example. The same reference numerals will be given to configurations which are the same as those in FIG. 5, and description thereof will be omitted.

As illustrated in FIG. 10(b) and 10(c), and S15 in FIG. 11, a different point between Exemplary Embodiment 1 and Modification Examples 1 to 3 and the present modification example is that determination time T2 and relative tolerance L2 (second preset intensity) are stored in advance as a parameter, in addition to determination time T1 and relative tolerance L1 (first preset intensity).

As illustrated by characteristic A (solid line portion) in FIG. 10, characteristic A falls below relative tolerance L1 at time t3 that first determination time T1 has elapsed. Accordingly, control unit 9 does not transmit warning signal 15. In addition, characteristic A falls below relative tolerance L2 at time t6 (sixth time point) that determination time T2 which is longer than determination time T1 has elapsed. Accordingly, control unit 9 transmits galvano operation command signal 14. In this manner, galvano scanner 6 is operated at time t4. This controls the laser machining in a case where the falling characteristics of laser beam 21 are normal.

In contrast, as illustrated by characteristic B (broken line portion) in FIG. 10, characteristic B exceeds relative tolerance L1 at time t3 that determination time T1 has elapsed. Accordingly, control unit 9 transmits warning signal 15. Then, characteristic B exceeds relative tolerance L2 at time t6 that determination time T2 which is longer than determination time T1 has elapsed. Accordingly, as illustrated by a broken line in FIG. 10(c), control unit 9 does not transmit galvano operation command signal 14, and galvano scanner 6 is not operated. This controls the laser machining in a case where the falling characteristics of laser beam 21 are abnormal. In this case, warning signal 15 is not transmitted, and galvano scanner 6 is stopped (S15).

If characteristic A exceeds relative tolerance L1 at time t3 that determination time T1 has elapsed and characteristic B falls below relative tolerance L2 at time t6 that determination time T2 has elapsed, control unit 9 transmits only warning signal 15, and galvano scanner 6 is continuously operated. According to these settings, it is possible to prepare maintenance work for laser oscillator 2 before laser beam machine 1 is stopped.

Hitherto, in the present exemplary embodiment and Modification Examples 1 to 4, an example has been described in which, as a value of detection signal 12, detection signal 12 is used only once at time t3 or t6 that determination time T1 or T2 has elapsed. However, multiple sampling command signals 13 may be output so as to include time t3 or t6. Values of detection signals 12 received multiple times may be averaged, and the average value may be set to a value of detection signal 12.

For example, multiple detection signals 12 are received during a period in which time t3 that determination time T1 has elapsed is set to final timing. Specifically, a method may be employed in which detection signal 12 is received 11 times in total for 1 µ second before 10 µ seconds of time t3. Alternatively, multiple detection signals 12 are received during a period in which time t3 is set to central timing. Specifically, a method may be employed in which detection signal 12 is received 11 times in total for 1 µ second during a period after 5 µ seconds before 5 µ seconds of time t3.

According to these settings, it is possible to prevent erroneous determination caused by variations in measurement values due to disturbance.

Alternatively, the number of times that detection signal 12 is greater than relative tolerance L1 may be counted, and it may be determined as abnormal in a case of exceeding a predetermined number of times. That is, over multiple machining cycles, the laser machining may be determined as abnormal. In this case, it is also possible to prevent erroneous determination caused by variations in measurement values due to disturbance.

Alternatively, after it is determined as abnormal in a case where detection signal 12 is greater than relative tolerance L1, warning signal 15 may be output, or the laser machining may be continued. Then, a method can also be employed in which the number of times that it is determined as abnormal is counted in advance so as to stop an operation of laser beam machine 1 in a case of exceeding a predetermined number of times. That is, over multiple machining cycles, it may be determined whether to stop the operation of laser beam machine 1. In this case, it is possible to prevent the influence of erroneous determination caused by variations in measurement values due to disturbance.

Without being limited to only the timing of comparison and determination, sampling command signal 13 may be output and detection signal 12 may be received at a predetermined cycle after a fixed period of time from when laser beam machine 1 is operated. In this case, detection signal 12 is always received. Accordingly, the comparison and determination may be performed using a value of detection signal 12 at predetermined timing.

### (Exemplary Embodiment 2)

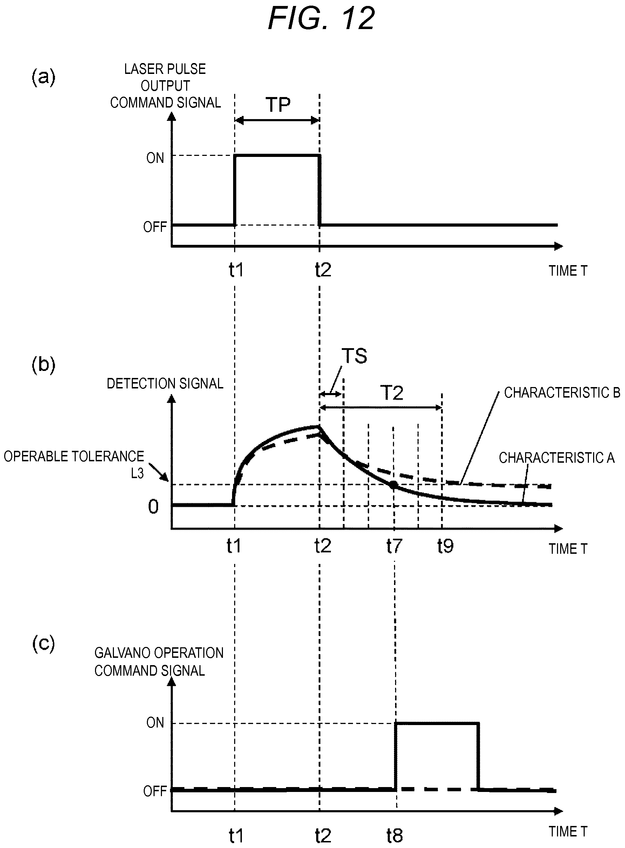

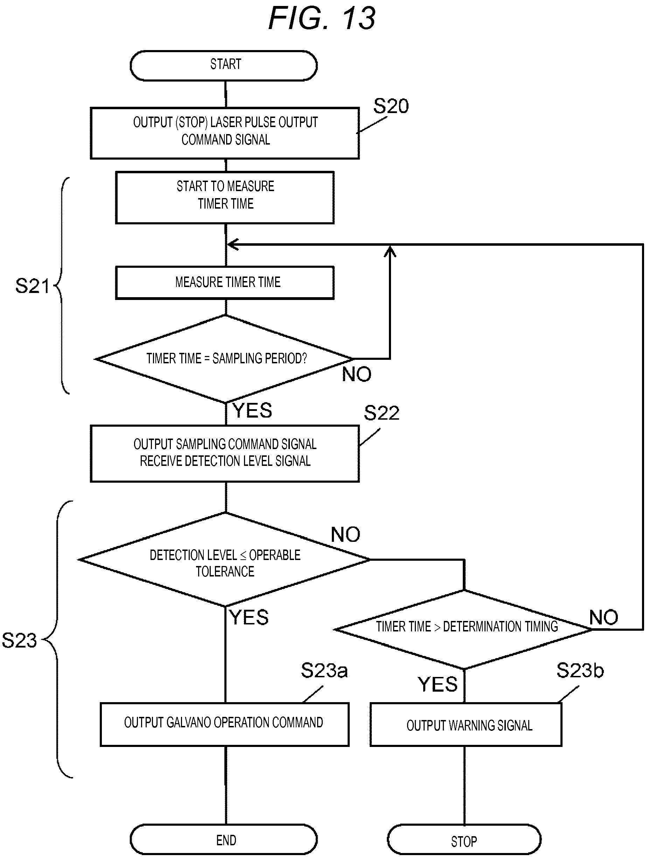

A second exemplary embodiment of a laser beam machine according to the present disclosure will be described with reference to FIGS. 12 and 13. Points having the same repeated description as that in Exemplary Embodiment 1 and Modification Examples 1 to 4 will be simplified or omitted. Different points will be described. In addition, the same reference numerals will be given to the same configurations.

The present exemplary embodiment is common to the first exemplary embodiment with regard to FIGS. 1 to 3 which illustrate the configurations. However, controlling in the laser machining, particularly, an operation of control unit 9 is different.

### <Operation of Laser Beam Machine 1>

The operation described below corresponds to one cycle in which laser machining is performed using one laser pulse in one machining region during the machining of workpiece 99.

FIG. 12 is a timing chart illustrating each state of (a) a laser pulse output command signal, (b) a detection signal, and (c) a galvano operation command signal of the laser beam machine according to the present exemplary embodiment. FIG. 13 is a flowchart illustrating the operation of the laser beam machine according to the present exemplary embodiment. In particular, the flowchart illustrated in FIG. 5 is provided so as to mainly describe the operation of control unit 9.

If galvano scanner 6 is positioned so as to emit machining laser beam 23 to machining position P of workpiece 99, laser pulse output command signal 11 is output from control unit 9 (S20). This process is the same as that in FIGS. 3 and 4(a) and S10 in FIG. 5 which are described in Exemplary Embodiment 1.

Control unit 9 starts to measure a time from time t2, and determines whether or not preset sampling period TS stored in parameter storage unit 92 has elapsed (S21).

At a time point that sampling period TS has elapsed, control unit 9 outputs sampling command signal 13 to light detector 4, and light detector 4 outputs detection signal 12 indicating the energy of measurement laser beam 22 which is measured at timing that sampling command signal 13 is received (S22).

Sampling period TS is an interval set to such an extent that a transient change in the falling of the laser pulse output can be measured. For example, if the falling time of the laser pulse is several ten µ seconds, sampling period TS is approximately 1 µ second.

Control unit 9 compares detection signal 12 with preset stored operable tolerance L3. Operable tolerance L3 is set to be a value corresponding to the energy of machining laser beam 23 which does not cause unsatisfactory machining in the laser machining even if galvano scanner 6 is operated. Specifically, although the value depends on a material of workpiece 99, operable tolerance L3 is set in advance to be a value corresponding to one energy within 1% to 3% of peak energy.

In a case where the energy of laser beam 21 does not sufficiently fall yet and detection signal 12 is greater than operable tolerance L3, control unit 9 receives detection signal 12 again after awaiting sampling period TS, and compares detection signal 12 with operable tolerance L3. This sampling of detection signal 12 is repeatedly performed until the value of detection signal 12 is equal to or smaller than operable tolerance L3. Control unit 9 outputs galvano operation command signal 14 at time t7 (seventh time point) that the energy of laser beam 21 sufficiently falls and detection signal 12 is equal to or smaller than operable tolerance L3 (S23a). As illustrated by characteristic A (solid line portion) in FIG. 12(b), time t7 corresponds to the timing that the value of detection signal 12 falls below operable tolerance L3 for the first time. As illustrated in FIG. 12(c), control unit 9 turns on galvano operation command signal 14 at time t8 (eighth time point) equal to or later than time t7. In FIG. 12(c), time t8 is illustrated concurrently with time t7. However, time t8 may be later than time t7.

According to the above-described settings, it is possible to prevent unsatisfactory machining from occurring due to machining laser beam 23 emitted to an unnecessary portion by galvano scanner 6 driven before the energy of laser beam 21 sufficiently falls. Furthermore, it is not necessary to set an enough waiting time until galvano scanner 6 starts to be operated, and thus, a tact time can be shortened in the laser machining.

Next, description will be made on the operation of laser beam machine 1 in a case where the characteristics of laser beam 21 emitted from laser oscillator 2 are changed, particularly, in a case where the energy falling characteristics of laser beam 21 are conspicuously degraded. As illustrated by characteristic B (broken line portion) in FIG. 12(b), in a case where the energy falling characteristics of laser beam 21 are degraded, it takes long time until detection signal 12 is equal to or smaller than operable tolerance L3. Therefore, determination time T2 for determining abnormality is set in a loop in which detection signal 12 is repeatedly received during sampling period TS. Then, in a case where detection signal 12 is not equal to or smaller than operable tolerance L3 even at time t9 (ninth time point) that determination time T2 has elapsed from time t7, it is determined that laser oscillator 2 is abnormal. Control unit 9 outputs warning signal 15 to warning display unit 10 (S23b). The time to transmit warning signal 15 to warning display unit 10 is set to be a tenth time point. Furthermore, as illustrated by a broken line in FIG. 12(c), control unit 9 does not output galvano operation command signal 14, and stops overall driving of laser beam machine 1 including laser oscillator 2.

According to the above-described configurations, even if falling characteristics of laser beam 21 output from laser oscillator 2 are degraded, it is possible to prevent unsatisfactory machining from occurring due to machining laser beam 23 emitted to an unnecessary portion by galvano scanner 6 driven before the energy of laser beam 21 sufficiently falls. Furthermore, a worker can recognize that laser oscillator 2 is abnormal.

If determination time T2 is set to be longer, it takes long time to perform the laser machining. Accordingly, determination time T2 may be set to the time which enables the worker to determine that the falling characteristics of laser beam 21 output from laser oscillator 2 are degraded. For example, galvano operation waiting time TG is set as the time which does not cause unsatisfactory machining if the falling characteristics of laser beam 21 are not degraded. Therefore, determination time T2 may be set to be substantially the same as galvano operation waiting time TG.

Hitherto, in the present exemplary embodiment, detection signal 12 received during each sampling period TS is compared with operable tolerance L3. However, a value calculated from detection signals 12 received multiple times may be compared with operable tolerance L3.

As an example, a movement average may be obtained between detection signal 12 received during each sampling period TS and detection signal 12 previously obtained multiple times, for example, 10 times. In this manner, the movement average of detection signals 12 may be compared with operable tolerance L3. Alternatively, detection signal 12 received during each sampling period TS, and a value obtained through multiple regression calculation including detection signal 12 previously obtained multiple times may be compared with operable tolerance L3.

In this manner, it is possible to prevent erroneous determination caused by variations in detection signal 12 of measurement laser beam 22 due to disturbance.

Without being always limited to a case where outputting sampling command signal 13 and receiving detection signal 12 during sampling period TS have to start after time t2 that laser pulse output command signal 11 is turned off, both of these may start at a time point where a fixed period of time has elapsed after laser beam machine 1 is operated.

In Exemplary Embodiment 1 and Modification Examples 1 to 4, and in Exemplary Embodiment 2, referring to FIG. 1, a configuration has been described in which spectroscope 3 is disposed between laser oscillator 2 and optical adjustment unit 5. According to this configuration, it is possible to detect a state of laser beam 21 before the profile or the light amount is adjusted by optical adjustment unit 5, and thus, it is possible to directly determine degraded output characteristics of laser beam 21 output from laser oscillator 2.

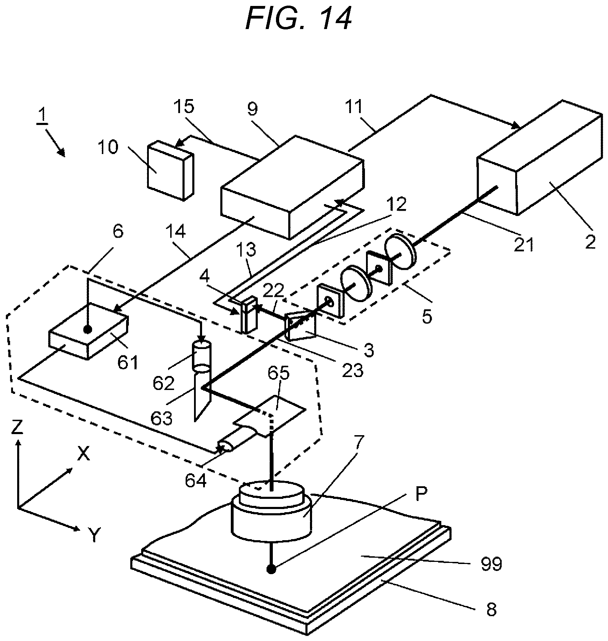

In contrast, FIG. 14 is a perspective view illustrating a schematic configuration of another laser beam machine according to the present disclosure. As illustrated in FIG. 14, an optical adjustment unit may be disposed between spectroscope 3 and laser oscillator 2. According to this configuration, it is possible to detect a state of laser beam 21 whose profile or light amount is previously adjusted by optical adjustment unit 5 and which is closer to galvano scanner 6. Therefore, it is possible to determine the characteristics of laser beam 21 which contribute to the laser machining.

Details will be further described. A state at time t2 that laser pulse output command signal 11 is turned off is different from a state where a laser medium is consecutively excited. Accordingly, the number of modes of laser beams is changed, and beam profiles are different. Therefore, ratios of the beam passing through an aperture stop or an iris in optical adjustment unit 5 are different, and the falling characteristics are apparently different. Therefore, it is possible to more accurately prevent unsatisfactory machining by disposing optical adjustment unit 5 between spectroscope 3 and laser oscillator 2.

In a case where spectroscope 3 is located immediately in front of galvano scanner 6 inside the optical path of laser beam 21, a parameter compared with detection signal 12 is set so as to correspond to the intensity of laser beam 21 used for the laser machining after laser beam 21 passes through optical adjustment unit 5.

### INDUSTRIAL APPLICABILITY

A laser beam machine according to the present disclosure can monitor degraded energy falling characteristics of a laser pulse, and can warn or can prevent unsatisfactory laser machining. Therefore, the present disclosure is effectively applied to a laser beam machine which drills into a substrate by using laser beam.

### REFERENCE MARKS IN THE DRAWINGS

- 1: LASER BEAM MACHINE
- 2: LASER OSCILLATOR
- 3: SPECTROSCOPE
- 4: LIGHT DETECTOR
- 5: OPTICAL ADJUSTMENT UNIT
- 6: GALVANO SCANNER
- 7: CONDENSER LENS
- 8: MACHINING TABLE
- 9: CONTROL UNIT
- 10: WARNING DISPLAY UNIT
- 11: LASER PULSE OUTPUT COMMAND SIGNAL
- 12: DETECTION SIGNAL
- 13: SAMPLING COMMAND SIGNAL
- 14: GALVANO OPERATION COMMAND SIGNAL
- 15: WARNING SIGNAL
- 21: LASER BEAM
- 22: MEASUREMENT LASER BEAM
- 23: MACHINING LASER BEAM
- 61: GALVANO CONTROLLER
- 62, 64: MOTOR
- 63, 65: GALVANO MIRROR
- 91: MAIN SOFTWARE PROCESSING UNIT
- 92: PARAMETER STORAGE UNIT
- 93: LASER OUTPUT COMMAND UNIT
- 94: SAMPLING COMMAND UNIT
- 95: DETECTION LEVEL RECEIVING UNIT
- 96: COMPARISON UNIT
- 97: GALVANO COMMAND UNIT
- 98: WARNING SIGNAL OUTPUT UNIT
- 99: WORKPIECE
- P: MACHINING POSITION
- r: LASER
- ra: DETERMINATION LASER
- t, t1, t2, t3, t4, t6, t7, t8, t9: TIME
- L1, L2: RELATIVE TOLERANCE
- L3: OPERABLE TOLERANCE
- P1, P2: LASER PULSE
- T1, T2: DETERMINATION TIME
- TG: GALVANO OPERATION WAITING TIME
- TP: EXCITATION PULSE WIDTH
- TS: SAMPLING PERIOD
- V1, V2: MAXIMUM VOLTAGE VALUE
- Vx: REFERENCE VALUE
- 100: LASER BEAM MACHINE
- 101: LASER OSCILLATOR
- 102: BEAM SPLITTER
- 103: LIGHT DETECTOR
- 104: COUNTER
- 105: MAIN CONTROLLER
- 106: INDICATOR

## Claims

1. A laser beam machine comprising:
a laser oscillator that outputs laser beam;
a spectroscope on which the laser beam is entered, and that emits the laser beam after splitting the laser beam into machining laser beam and measurement laser beam;
a light detector on which the measurement laser beam is entered, and that transmits a detection signal indicating intensity of the measurement laser beam;
an emission unit on which the machining laser beam is entered, and that emits the machining laser beam to a workpiece; and
a control unit that is connected to the laser oscillator, the light detector, and the emission unit,
wherein the control unit transmits an output signal for starting an output of the laser beam at a first time point and stopping the output of the laser beam at a second time point which is later than the first time point, to the laser oscillator,
wherein the control unit receives the detection signal indicating first detection intensity which is greater than first preset intensity, from the light detector, at a third time point which is later than the second time point,
wherein the control unit transmits a drive signal for controlling the emission unit to be driven, to the emission unit, at a fourth time point equal to or later than the third time point, and
wherein the control unit transmits a warning signal at a fifth time point equal to or later than the third time point.

2. The laser beam machine of Claim 1,
wherein the third time point and the fourth time point are concurrent with each other, and
wherein the drive signal operates the emission unit.

3. The laser beam machine of Claim 1,
wherein the fourth time point is later than the third time point, and wherein the drive signal continues to stop the emission unit.

4. The laser beam machine of Claim 1,
wherein the fourth time point is later than the third time point, and
wherein the control unit receives a detection signal indicating second detection intensity, from the light detector, at a sixth time point which is later than the third time point and which is earlier than the fourth time point.

5. The laser beam machine of Claim 4,
wherein the second detection intensity is smaller than second preset intensity, and
wherein the drive signal operates the emission unit.

6. The laser beam machine of Claim 5,
wherein the fourth time point and the sixth time point are concurrent with each other.

7. The laser beam machine of Claim 4,
wherein the sixth time point is earlier than the fourth time point,
wherein the second detection intensity is greater than second preset intensity, and
wherein the drive signal continues to stop the emission unit.

8. A laser beam machine comprising:
a laser oscillator that outputs laser beam;
a spectroscope on which the laser beam is entered, and that emits the laser beam after splitting the laser beam into machining laser beam and measurement laser beam;
a light detector on which the measurement laser beam is entered, and that transmits a detection signal indicating intensity of the measurement laser beam;
an emission unit on which the machining laser beam is entered, and that emits the machining laser beam to a workpiece; and
a control unit that is connected to the laser oscillator, the light detector, and the emission unit,
wherein the control unit transmits an output signal for starting an output of the laser beam at a first time point and stopping the output of the laser beam at a second time point which is later than the first time point, to the laser oscillator,
wherein the control unit periodically receives the detection signal from the light detector, at a time point equal to or later than the second time point,
wherein the control unit receives the detection signal indicating third detection intensity which is smaller than third preset intensity, from the light detector at a seventh time point which is later than the second time point, and
wherein the control unit transmits a drive signal for operating the emission unit, to the emission unit at an eighth time point equal to or later than the seventh time point.

9. The laser beam machine of Claim 8,
wherein the control unit receives the detection signal indicating fourth detection intensity which is greater than fourth preset intensity, from the light detector, at a ninth time point where a predetermined time has elapsed from the seventh time point, and
wherein the control unit transmits a warning signal at a tenth time point equal to or later than the ninth time point.

10. The laser beam machine of any one of Claims 1 to 9, further comprising:
an optical adjustment unit that is disposed between the laser oscillator and the spectroscope so as to adjust the laser beam.

11. The laser beam machine of any one of Claims 1 to 9, further comprising:
an optical adjustment unit that is disposed between the spectroscope and the emission unit so as to adjust the machining laser beam.
